Europäisches Patentamt

European Patent Office

Office européen des brevets

(11) Publication number: **0 347 214**
**A2**

(12) # EUROPEAN PATENT APPLICATION

(21) Application number: **89306049.1**

(22) Date of filing: **15.06.89**

(51) Int. Cl.⁴: **B 24 D 15/00**

(30) Priority: **16.06.88 ZA 884305**

(43) Date of publication of application:
**20.12.89 Bulletin 89/51**

(84) Designated Contracting States: **BE GB NL**

(71) Applicant: **DE BEERS INDUSTRIAL DIAMOND DIVISION
(PROPRIETARY) LIMITED
8th Floor 45 Main Street
Johannesburg Transvaal (ZA)**

(72) Inventor: **Tolkowsky, Gabriel Shraga
30 Maria Lei
Antwerpen (BE)**

**Cronselaar, Gerit Jan Lucas
Felix Timmermans Hof, No. 2
Niljen (BE)**

**Burns, Robert Charles
15 Los Angeles Drive
Northcliff Johannesburg Transvaal (ZA)**

(74) Representative: **Jones, Alan John et al
CARPMAELS & RANSFORD 43 Bloomsbury Square
London, WC1A 2RA (GB)**

(54) **Diamond tool.**

㉗ A diamond scaife for polishing diamonds has a working surface made of cast iron, which working surface has a paste uniformly spread across it, the paste containing a plurality of small particles of a crushed thermally stable diamond compact which contains a silicon-based second phase.

EP 0 347 214 A2

Description

## DIAMOND TOOL

## BACKGROUND OF THE INVENTION

This invention relates to diamond tools, particularly diamond scaifes.

A diamond scaife is a tool which comprises a cast iron plate, the working surface of which has a paste containing a plurality of small diamond particles uniformly spread across it. The paste is rubbed on to the surface and then worked in with a piece of low quality diamond. A diamond scaife is a tool used for polishing diamonds.

## SUMMARY OF THE INVENTION

According to a first aspect of the invention there is provided a diamond tool comprising a working surface made of an iron based material having a paste uniformly spread across the working surface, the paste containing a plurality of small particles of a crushed thermally stable diamond compact which contains a silicon-based second phase.

According to a second aspect of the invention there is provided a mass of small particles of a crushed thermally stable diamond compact which contains a silicon-based second phase for use in a diamond tool as described above.

According to a third aspect of the invention there is provided a method of polishing a diamond using a diamond tool having a working surface made of an iron based material which includes the step of bringing a face of the diamond into contact with the working surface of the tool having a paste uniformly spread across the working surface, the paste containing a plurality of small particles of a crushed thermally stable diamond compact which contains a silicon based second phase, for a time suitable to polish the face.

## DETAILED DESCRIPTION OF THE INVENTION

The diamond tool is preferably a diamond scaife.

The working surface may be made of any iron based material, preferably cast iron.

The thermally stable diamond compact is one which is not substantially degraded when subjected to temperatures of the order of 1200°C in a inert, reducing or non-oxidising atmosphere. The second phase of the compact is silicon-based. The second phase may, for example, consist essentially of silicon in the form of silicon and/or silicon carbide. The second phase may, alternatively, consist essentially of silicon and a metal such as nickel or chromium, the silicon being in the form of silicon, silicon carbide and/or a metal silicide.

The thermally stable diamond compact is crushed to produce a mass of particles useful in the practice of the invention. The particles which are used typically have a size of less than 40 microns.

The paste may be formed from an oil such as olive oil, or a grease or by dissolving an adhesive (1 part) in acetone (10 parts).

It has been found that diamond particles which have the characteristics mentioned above, can be spread easily across the working surface of a diamond scaife and adhere better to this surface in use than conventional synthetic diamond. The diamond particles have the ability to cut faster than natural or synthetic diamond powders. When polishing diamond, smoother facets are achieved using the diamond particles than when natural or synthetic diamond powder is used.

## Claims

1. A diamond tool having a working surface made of an iron based material having a paste uniformly spread across the working surface, is characterised in that the paste contains a plurality of small particles of a crushed thermally stable diamond compact which contains a silicon-based second phase.

2. A diamond tool according to claim 1 is characterised in that the working surface is made of cast iron.

3. A diamond tool according to claim 1 or claim 2 is characterised in that the paste contains a plurality of small particles of a crushed thermally stable diamond compact having a second phase which consists essentially of silicon or silicon carbide.

4. A diamond tool according to claim 1 or claim 2 is characterised in that the paste contains a plurality of small particles of a crushed thermally stable diamond compact having a second phase which consists essentially of silicon and a suitable metal, the silicon being present in the form of silicon, silicon carbide and/or a metal silicide.

5. A diamond tool according to claim 4 is characterised in that the metal in the second phase is nickel or chromium.

6. A diamond tool according to any one of claims 1 to 5 is characterised in that the particles have a size of less than 40 microns.

7. A diamond tool according to any one of claims 1 to 6 is characterised in that the diamond tool is a diamond scaife.

8. A mass of small particles of a crushed thermally stable diamond compact which contains a silicon-based second phase for use in a diamond tool comprising a working surface made of an iron based material having a paste uniformly spread across the working surface, the paste containing a plurality of the small particles.

9. A method of polishing a diamond using a diamond tool having a working surface made of an iron based material includes the step of bringing a face of the diamond into contact with the working surface of the tool having a paste uniformly spread across the working surface, the paste containing a plurality of small particles of a crushed thermally stable diamond compact which contains a silicon based second phase, for a time suitable to polish the face.

10. A method according to claim 9 wherein the diamond tool comprises a diamond scaife.